# FASCICULE DE BREVET EUROPEEN

(11) **EP 2 768 731 B1**
(45) Date de publication et mention de la délivrance du brevet: **09.05.2018**
(21) Numéro de dépôt: 12772977.0
(22) Date de dépôt: 18.10.2012
(51) Int. Cl.: B64G 1/40, F17C 13/00, F02K 9/44, F02K 9/60, B29C 64/153

(54) **DISPOSITIF D'EXPULSION/RETENTION DE LIQUIDES POUR RESERVOIR D'ENGIN SPATIAL**
VORRICHTUNG ZUM AUFSTAUEN UND AUSSTOSSEN VON FLÜSSIGKEITEN FÜR EINEN TANK EINES RAUMFAHRZEUGES
DEVICE FOR THE EXTENSION AND RETENTION OF LIQUIDS FOR A TANK OF A SPACECRAFT

(30) Priorité: 18.10.2011 FR 1103176
(43) Date de publication de la demande: 27.08.2014
(73) Titulaire: Airbus Defence and Space SAS, 31402 Toulouse Cedex 4 (FR)
(72) Inventeur: DANDALEIX, Louis, F-31470 Fonsorbes (FR)
(74) Mandataire: Ipside
(86) Numéro de dépôt international: PCT/EP2012/070657
(87) Numéro de publication internationale: WO 2013/057193

(56) Documents cités:
- EP-A1- 0 132 175
- EP-A1- 0 434 509
- US-A- 4 733 531

## Description

L'invention relève du domaine des réservoirs de liquides d'engins spatiaux, notamment les engins destinés à évoluer en gravité réduite ou nulle.

Elle concerne plus particulièrement un dispositif d'expulsion/rétention de liquides (noté par abréviation DEL) destiné à être placé au sein d'un réservoir d'ergol liquide pour moteur d'engin spatial satellite, sonde, étage supérieur de lanceur, etc.

### Contexte de l'invention et problème posé

Les satellites et engins spatiaux comportent fréquemment des propulseurs à ergols liquides pour leurs besoins de poussées de forte intensité. Les ergols liquides destinés à alimenter ces propulseurs sont stockés dans des réservoirs, dont la conception doit tenir compte des conditions d'environnement dans lequel ces engins sont appelés à évoluer, et notamment une gravité quasiment nulle, ou une gravité sensiblement inférieure à la gravité terrestre, orientée de façon variable.

Dans un tel réservoir, un ergol en phase liquide, contenu dans le réservoir doit pouvoir être évacué par un orifice d'évacuation. Généralement, le réservoir contient à la fois un ergol en phase liquide et des gaz (vapeurs d'ergol, gaz inerte de pressurisation). Le dispositif d'expulsion de liquides doit favoriser l'expulsion de liquide hors du réservoir par l'orifice d'évacuation, tout en empêchant la sortie par cet orifice des gaz présents dans le réservoir, ce qui pourrait nuire au bon fonctionnement du système de propulsion (risque d'explosion).

Or l'absence d'une direction constante de gravité permettant au liquide de se regrouper en un point bas empêche l'utilisation de dispositifs traditionnels de récupération de liquides et de séparation d'avec des bulles de gaz.

Dans d'autres systèmes de propulsion de satellites, dits « à gaz froid », un fluide est stocké dans un réservoir à l'état diphasique. Le réservoir est chauffé pour générer du gaz, qui est évacué dans une tuyauterie et libéré au niveau des tuyères, créant ainsi une poussée sur le satellite. Contrairement aux systèmes précédents où il faut expulser du liquide sans bulles, il s'agit ici d'évacuer du gaz sans gouttelettes. La problématique est alors de retenir le liquide dans le réservoir, en utilisant un dispositif de rétention de liquides.

Divers dispositifs d'expulsion ou rétention de liquide ont donc été conçus pour remédier à ce problème. On peut citer à titre d'art antérieur dans ce domaine le Brevet Européen EP 0 132 175 B2, publié le 23/1/1985, de la société Matra, qui a trait à un réservoir de stockage de liquide à confinement capillaire.

On peut également citer le Brevet FR 2 655 956, de la Société Européenne de Propulsion, publié le 21 juin 1991 qui vise un réservoir à effet capillaire de coque.

Enfin, le brevet EP 1 868 891 d'Astrium SAS publié le 26 décembre 2007 décrit l'utilisation d'un dispositif de rétention de liquide utilisé dans un système de propulsion à gaz froid.

On connaît également un document brevet EP 0 434 509 d'Aerospatiale, qui vise un dispositif d'alimentation en ergol liquide pour véhicule spatial, utilisant un réservoir doté d'une structure capillaire à base de cellules hexagonales.

Selon l'état de l'art, le coeur des dispositifs d'expulsion ou de rétention de liquide est constitué en général d'une structure capillaire, appelée **éponge,** dont la fonction est de retenir le liquide par capillarité lors du fonctionnement en apesanteur lorsque le satellite est placé sur son orbite. Cette éponge est placée près de l'orifice d'évacuation de l'ergol liquide et communique avec cet orifice.

L'éponge du dispositif d'expulsion/rétention de liquides présente un volume suffisant pour retenir une quantité d'ergols liquides au moins égale, et généralement supérieure, à une quantité prédéterminée. Dans le cas d'un dispositif d'expulsion, celle-ci est la quantité nécessaire pour réaliser un type de manoeuvre au cours de laquelle le système de propulsion doit fonctionner en continu pendant une durée prédéfinie, alors même que l'accélération appliquée au réservoir pendant ladite manoeuvre est appliquée dans une direction telle que les ergols liquide ne sont pas nécessairement plaqués vers le fond du réservoir dans lequel est situé l'orifice d'évacuation du liquide. Entre deux telles manoeuvres, l'engin se trouve à nouveau en gravité nulle, et l'éponge se recharge en liquide tout en évacuant le gaz qui s'y trouve.

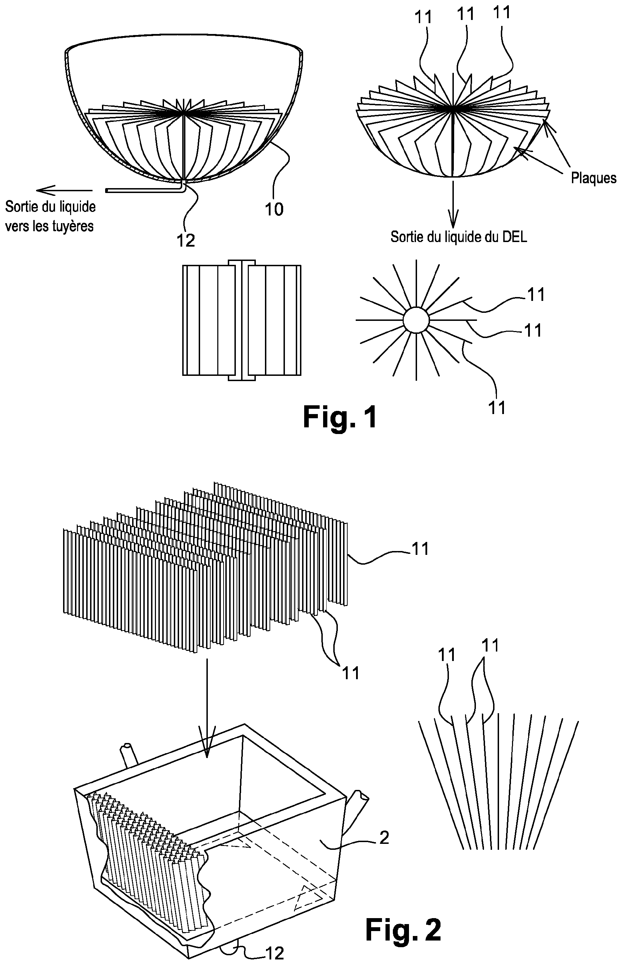

Dans une disposition particulière de l'art antérieur, illustrée par la figure 1, l'éponge d'un dispositif d'expulsion/rétention de liquides est constituée d'un grand nombre de lames 11, par exemple métalliques, disposées pour offrir un gradient capillaire dans une direction favorisant l'expulsion du fluide par un orifice d'extraction du liquide 12, prévu à cet effet.

Une grandeur représentative de la capillarité en un point de l'éponge est la courbure moyenne de la surface libre entre liquide et gaz en ce point. On entend par **gradient capillaire** dans une direction donnée, la dérivée spatiale de la capillarité dans cette direction. Un gradient positif dans une direction donnée signifie que la capillarité augmente dans cette direction. Lorsque les forces gravitationnelles ou d'accélération sont faibles, le liquide contenu dans cette éponge tend naturellement à se déplacer vers la zone de capillarité la plus forte, suivant la direction où le gradient capillaire est positif, contrairement au gaz qui tend naturellement à se déplacer vers la zone de capillarité la plus faible, suivant la direction où le gradient capillaire est négatif. L'orifice d'extraction du liquide 12 est disposé à proximité immédiate de la zone de capillarité maximale de l'éponge, dite « zone d'expulsion/rétention ». La zone du dispositif par où peut s'échapper le gaz est une zone dite périphérique, en général éloignée de la zone d'expulsion/rétention de liquide.

Les lames 11, qui peuvent être planes ou ondulées, peuvent être disposées radialement de sorte à converger vers le centre du réservoir 10, créant ainsi un gradient capillaire dans cette direction. Le liquide est alors collecté dans la partie centrale du réservoir et acheminé par capillarité vers l'orifice d'évacuation de liquide.

Dans un autre exemple, illustré par la figure 2, les lames 11 sont disposées en éventail au sein d'un boitier 20. Elles sont disposées sensiblement dans la direction de l'axe du réservoir (dite direction verticale et notée Z) d'une façon telle qu'elles se resserrent lorsqu'elles se rapprochent de l'orifice d'extraction du liquide 12.

Les limitations des éponges de dispositif d'expulsion/rétention de liquides à base de lames, telles qu'illustrées dans les figures 1 et 2 notamment, et d'autres dispositifs de ce type suivant l'état de l'art, sont multiples.
- L'obtention d'une bonne pression capillaire nécessite un rapprochement suffisant des lames (typiquement 1 à 5 mm) ce qui nécessite un grand nombre de lames (typiquement une centaine).
- Les tolérances géométriques imposées au montage des lames sont contraignantes (typiquement inférieures à 0.5 mm).
- L'assemblage de ce grand nombre de pièces suivant l'état de l'art (par exemple par soudure) avec des tolérances contraignantes est difficile à réaliser et coûteux.
- Le type de pièces utilisées pour réaliser l'éponge suivant l'état de l'art limite les possibilités de conception de ce genre de dispositifs.

### Objectifs de l'invention

Un objectif de l'invention est de proposer un nouveau type d'éponge pour réservoir de liquide destiné à être utilisé en gravité nulle ou très réduite.

### Exposé de l'invention

A cet effet, l'invention vise en premier lieu un dispositif d'expulsion/rétention d'un liquide prédéterminé, apte à être intégré dans un réservoir de liquide destiné à fonctionner en gravité réduite ou nulle, ledit dispositif comprenant une zone dite périphérique et une zone dite zone d'expulsion/rétention de liquide. Le dispositif comprend une structure tridimensionnelle monobloc dite éponge comportant un ensemble d'éléments de forme sensiblement filaire, dits éléments filaires, ces éléments filaires étant espacés les uns des autres et s'étendant entre ladite zone périphérique de l'éponge et ladite zone d'expulsion/rétention de liquide, lesdits éléments filaires étant sensiblement orientés dans la direction d'écoulement du fluide au sein du dispositif.

A titre indicatif, le volume typique d'un tel dispositif pour une utilisation à bord de satellites est compris entre 0.5 litre et 5 litres pour une dimension hors tout typique comprise entre 10 cm et 100 cm.

Il est entendu ici par éléments filaires des éléments structuraux de forme relativement allongée dans une direction donnée, la section de ces éléments pouvant être de forme simple convexe, ou bien de forme plus élaborée, par exemple non convexe. Il est également entendu que ces éléments filaires peuvent être aussi bien rectilignes que curvilignes. Dans la présente description, ces éléments filaires sont rigides, en ce qu'ils conservent leur forme sous des contraintes liées à la pesanteur.

Afin de favoriser la progression du liquide dans la zone d'expulsion/rétention et la répulsion de bulles de gaz hors de cette zone, vers la zone périphérique, ces éléments filaires sont disposés de telle sorte que le gradient capillaire d'un fluide disposé au sein de ces seuls éléments filaires est positif ou nul dans le sens d'écoulement du fluide depuis ladite zone périphérique vers ladite zone d'expulsion/rétention de liquide. Par gradient capillaire en un point donné de l'éponge et dans une direction donnée, on entend la dérivée spatiale, en ce point et dans cette direction, de la courbure moyenne d'une surface libre de séparation liquide-gaz passant par ce point.

Par exemple, les éléments filaires sont disposés de telle sorte que la distance entre tout couple d'éléments filaires proches va en diminuant dans le sens d'écoulement du fluide depuis ladite zone périphérique vers ladite zone d'expulsion/rétention de liquide. Cette distance est mesurée le long des éléments filaires comme la longueur d'un segment reliant deux points desdits éléments filaires, ledit segment étant sensiblement orthogonal auxdits éléments filaires. La diminution de la distance entre des éléments filaires proches peut être continue. Elle peut être également discontinue (par paliers), en étant éventuellement nulle le long de tout ou partie des éléments filaires.

Les éléments filaires sont avantageusement disposés en réseau, au sens où les intersections des éléments filaires avec des nappes de surfaces orthogonales auxdits éléments filaires, sont situées aux sommets d'un pavage polygonal desdites surfaces. En d'autres termes, pour au moins une partie des surfaces perpendiculaires aux éléments filaires, les points correspondants aux intersections de ces éléments filaires avec cette surface déterminent deux à deux les côtés de polygones formant alors un pavage de ladite surface.

Dans les cas les plus courants, on peut considérer des pavages réguliers de type carré (quadrillage), ou hexagonal (nid d'abeille). Cependant, rien n'empêche de considérer des pavages plus complexes, ou irréguliers.

La section typique d'un élément filaire est une surface convexe de 0.05 à 1 mm2, cette surface correspondant à des éléments filaires sensiblement cylindriques d'un diamètre de 0.2 mm à 1 mm.

Les éléments filaires sont espacés les uns des autres d'une distance adaptée à créer, entre ces éléments filaires, des forces de capillarité suffisantes pour retenir le liquide (et/ou expulser le gaz). Cette distance dépend généralement du fluide considéré, en particulier de sa tension de surface et de sa capacité de mouillage de la surface de la structure. Une distance typique entre deux éléments filaires proches est entre 1 mm à 5 mm.

Les éléments filaires peuvent être reliés en leurs extrémités à des éléments structuraux du dispositif, comme des grilles, des capots ou des boîtiers, de sorte à assurer la tenue mécanique de l'ensemble, le tout formant une structure tridimensionnelle monobloc d'une seule pièce.

Dans ce cas, il sera avantageux que les éléments filaires aient une section non convexe, adaptée pour les rigidifier, par exemple une section en T, en X ou en Y.

Afin de ne pas perturber l'évolution du gradient capillaire au sein de l'éponge, il sera avantageux que les éléments filaires aient une section comportant des excroissances s'étendant le long des côtés (tels que définis plus haut) desdits polygones constituant le pavage polygonal du réseau d'éléments filaires. Par exemple, pour un quadrillage, la section pourra être en T ou en X, les branches du T ou du X s'étendant le long du quadrillage. Pour un réseau en nid d'abeille, la section pourra être en Y, les branches du Y s'étendant le long des arêtes des hexagones du nid d'abeille.

Afin d'améliorer la tenue mécanique et la rigidité du dispositif tout en minimisant sa masse, les éléments filaires peuvent être reliés entre eux par des entretoises (au sein même de l'éponge).

Dans ce cas, à partir du moment où les entretoises, par leur placement et par leur nombre, peuvent assurer la tenue mécanique et la rigidité de l'ensemble des éléments filaires, ceux-ci ne sont pas nécessairement reliés en leurs extrémités à des structures particulières. La structure tridimensionnelle monobloc peut alors n'être constituée que des éléments filaires et des entretoises reliant ces éléments. Cette structure peut alors être manipulée et intégrée en tant que pièce indépendante au reste du dispositif d'expulsion/rétention de liquide.

Les entretoises induisent très localement (typiquement sur la distance d'une demi-section d'entretoises) des pics de capillarité pouvant créer des gradients de capillarité négatifs. En d'autres termes, le liquide a tendance à être retenu aux croisements des éléments filaires et des entretoises. Il est donc avantageux que ces entretoises soient disposées de sorte à minimiser les pics de capillarité apparaissant le long des éléments filaires aux endroits où se situent lesdites entretoises.

Afin de minimiser ces pics de capillarité, **dans le cas de pavage polygonal,** il est avantageux que les projections des entretoises, parallèlement à la direction des éléments filaires, sur les nappes de surfaces orthogonales aux éléments filaires, soient approximativement confondues avec des côtés des polygones constituant le pavage polygonal du réseau d'éléments filaires.

Toujours dans un souci de minimiser les pics de capillarité, il est avantageux que les entretoises ne soient pas orthogonales aux éléments filaires, mais que l'angle entre les entretoises et les éléments filaires soient compris typiquement entre 20° et 70°.

Afin de minimiser la masse de l'éponge, les entretoises sont avantageusement en tout ou partie des éléments structuraux de forme sensiblement filaire. On entend par "forme sensiblement filaire" une forme allongée dont la longueur est plusieurs fois supérieure à la largeur, par exemple 10 fois, la section étant convexe et par exemple circulaire. Elles peuvent être rectilignes ou curvilignes.

S'il y a besoin d'une tenue mécanique plus importante, il peut être avantageux que les entretoises soient en tout ou partie des plaques reliant les éléments filaires, lesdites plaques étant éventuellement ajourées. On entend ici par "plaques" des éléments bidimensionnels, dont la longueur et la largeur sont plusieurs fois supérieurs à l'épaisseur, par exemple 10 fois. On entend par "ajourées" le fait que ces surfaces bidimensionnelles présentent une ou plusieurs lumières traversantes perpendiculaires à leur surface.

Dans les zones du dispositif où les entretoises sont de forme sensiblement filaire, il est avantageux que la distance entre deux entretoises consécutives diminue lorsqu'on se déplace dans le sens d'écoulement du fluide depuis ladite zone périphérique vers ladite zone d'expulsion/rétention de liquide. De la sorte, une bulle de gaz qui resterait coincée dans l'alvéole comprise entre des fils proches et deux entretoises pourra s'évacuer plus facilement vers l'alvéole immédiatement voisine et ce dans le sens contraire de l'écoulement de liquide.

Préférentiellement, ces **éléments filaires** et ces entretoises forment un ensemble de facettes latérales délimitées chacune par des segments d'éléments filaires et des entretoises, le périmètre des facettes associées à un élément filaire donné allant décroissant le long de cet élément filaire en se rapprochant de la zone de captation, selon une direction dite direction de gradient capillaire.

On entend par **facette** une succession de segments d'éléments filaires et d'entretoises formant un contour fermé, cette succession étant telle qu'aucun couple de sommets non voisins n'est relié par un segment d'élément filaire ou d'entretoise. Il s'agit donc de facettes non subdivisibles en deux sous-facettes.

Le terme d'élément filaire est ici utilisé de façon générale, étant entendu qu'il couvre aussi bien des éléments filaires rectilignes que curvilignes.

Tel qu'exposé, le dispositif favorise le déplacement progressif du liquide dans la direction de l'orifice d'évacuation du réservoir, et sa constitution monobloc améliore sa rigidité et sa simplicité d'installation.

Le sens de parcours des éléments filaires allant de la zone périphérique vers la zone de captation de liquide est une direction selon laquelle le gradient capillaire est positif.

Selon un mode de réalisation particulier, les facettes latérales déterminent des alvéoles polyédriques, chaque alvéole polyédrique présentant une forme tubulaire allongée, de section carrée ou rectangulaire, des alvéoles connexes associées à un même élément filaire présentant une section qui se rétrécit suivant la direction de gradient.

Plus particulièrement, au moins une partie des entretoises présentent une forme de segment de bande plane, l'éponge comprenant des couches d'alvéoles superposées, se succédant dans la direction Z de gradient capillaire, des ouvertures étant présentes dans deux faces opposées de chaque dite alvéole, lesdites faces étant sensiblement perpendiculaires à la direction Z de gradient capillaire.

En d'autres termes, l'éponge est ici un ensemble d'alvéoles polyédriques percées d'ouvertures, lesdites alvéoles et ouvertures étant dimensionnées pour déterminer un gradient capillaire dans une direction prédéterminée.

Encore plus particulièrement, la dimension des alvéoles successives, mesurée selon une direction X transverse à la direction Z de gradient capillaire, va en diminuant selon la direction de gradient capillaire. On comprend qu'il s'agit ici de la largeur des facettes, cette largeur étant mesurée selon une direction perpendiculaire à la direction de gradient capillaire.

Selon un mode de réalisation favorable, les sections droites de chaque alvéole dans un plan XY, transverse à la direction Z de gradient capillaire, sont de forme convexe, le diamètre des cercles inscrits dans ces sections diminuant selon la direction de gradient capillaire. Dans ce mode de réalisation, les arêtes sont de plus en plus proches selon au moins une dimension lorsqu'on se rapproche de la zone de captation, et les facettes perpendiculaires à ces arêtes sont donc de section de plus en plus réduite, contribuant ainsi à générer un gradient capillaire.

Selon un autre mode de réalisation d'un gradient capillaire, la dimension H₁, H₂,..., Hₙ, dite "hauteur" des facettes associées à un même élément filaire, mesurée dans la direction Z de gradient capillaire va en diminuant quand on se déplace dans cette direction. Dans ce mode de réalisation, éventuellement conjugué avec le précédent, le gradient capillaire est réalisé par diminution progressive de la hauteur des facettes latérales des alvéoles.

Selon un mode de réalisation préféré, les entretoises sont disposées entre les éléments filaires selon deux plans dits "verticaux" XZ et YZ, ces entretoises étant conformés en segments de baguette, forment chacune avec les éléments filaires auxquelles elles sont associées un angle voisin de 45°. Cette disposition est favorable à une réalisation simple de l'éponge par procédé de fusion laser sélective ("Selective Laser Metling").

Dans ce cas, selon un mode de réalisation particulier les entretoises forment des lignes brisées superposées :
- dans le plan vertical XZ, dit **longitudinal,** à une même "hauteur" selon la direction de gradient capillaire Z, une entretoise longitudinale sur deux étant orientée selon la direction +X+Z et une entretoise longitudinale sur deux étant orientée selon la direction +X-Z,
- dans le plan vertical YZ, dit **latéral,** à une même "hauteur" selon la direction de gradient capillaire Z, une entretoise latérale sur deux étant orientée selon la direction +Y+Z et une entretoise latérale sur deux étant orientée selon la direction +X-Z.

Encore plus particulièrement dans ce cas, les entretoises longitudinales et les entretoises latérales ne s'attachent pas à la même hauteur sur les éléments filaires, chaque entretoise latérale venant s'attacher à un élément filaire sensiblement à mi-distance entre les points de fixation des deux entretoises longitudinales les plus voisines

Il sera avantageux de fabriquer la structure tridimensionnelle monobloc d'une seule pièce selon un procédé de fabrication rapide à base de poudres, par exemple fusion/frittage par lit de poudre ou par projection.

Dans le cas où cette structure tridimensionnelle monobloc est solidaire d'autres éléments structuraux du dispositif avec lesquels elle forme une seule pièce, il est avantageux de fabriquer l'ensemble selon un procédé de fabrication rapide par exemple à base de poudres.

Dans une de ces réalisations préférées, le dispositif comprend une structure tridimensionnelle monobloc dit éponge (32) comportant un réseau d'éléments de forme sensiblement filaire (dits éléments filaires) s'étendant entre la zone périphérique de l'éponge et la zone d'expulsion/rétention de liquide, les éléments filaires étant sensiblement orientés dans la direction d'écoulement du fluide au sein du dispositif, ces éléments filaires étant reliés entre eux par des entretoises, ces éléments filaires étant disposés de telle sorte que le gradient capillaire soit, en l'absence d'entretoises, positif ou nul dans le sens d'écoulement du fluide depuis ladite zone périphérique vers ladite zone d'expulsion/rétention de liquide, cette structure étant fabriquée d'une seule pièce selon un procédé de fabrication rapide à base de poudres.

L'invention vise sous un second aspect un procédé de fabrication d'un dispositif d'expulsion de liquide tel qu'exposé. Dans ce procédé, l'éponge est fabriquée par un procédé de fabrication rapide couche par couche à base de poudres, de type connu dans la littérature anglo-saxonne sous le nom générique de Layer Manufacturing (LM) (ou encore : Additive Manufacturing, Selective Laser Sintering, Selective Laser Melting, Rapid Prototyping, Direct Digital Manufacturing, 3D printing), le procédé comprenant des étapes suivantes :
Etape 100 : une description numérique tridimensionnelle de l'éponge à réaliser est générée et entrée dans la mémoire d'une machine de SLM,
Etape 200 : l'éponge 32, est décomposée de façon logicielle en une superposition de couches d'épaisseur prédéterminée,
Etape 300 : l'éponge 32 est fabriquée couche par couche,
   Sous-étape 310 : pour la première couche, une poudre d'un matériau choisi en fonction du type de liquide à stocker dans le réservoir est versée sur un substrat plan,
   Sous-étape 320 : un laser mobile vient solidifier par fusion le dessin de la pièce, tel que vue en coupe au niveau de cette couche, le reste de la poudre étant inchangé et restant en place,
   Sous-étape 330 : une nouvelle couche de poudre est versée sur la précédente, et ainsi de suite de façon itérative jusqu'à atteindre la hauteur finale de l'éponge 32,
      les éléments filaires 70 sont fabriquées selon la direction verticale Z correspondant à la direction de la gravité au sol,
   Sous-étape 340 : Une fois la pièce complètement formée, on vient retirer la poudre non solidifiée, laissant ainsi apparaître l'éponge monobloc,
Etape 400 : L'éponge 32 est ensuite séparée de son substrat.

Avantageusement, la disposition des éléments filaires et celles des entretoises filaires pendant la fabrication sont telles qu'aucun élément filaire et aucune entretoise filaire ne soit perpendiculaire au sens de fabrication.

De préférence, les éléments filaires sont fabriqués de telle sorte qu'ils se forment en étant disposés sensiblement dans le sens de fabrication, et l'angle entre les entretoises filaires et les éléments filaires est éloigné de 90° d'au moins quelques degrés. On entend par "quelques degrés" un écart typiquement compris entre 5° et 15°.

Selon un mode de réalisation préféré, le procédé comprend en outre une étape suivante : Etape 500 : de nettoyage de l'éponge par traitement ultrasonique.

Dans ce cas, plus particulièrement, l'éponge est soumise à cinq passages successifs dans un dispositif de nettoyage ultrasonique réalisé en immersion dans un bain d'alcool isopropylique et d'eau.

Dans un mode de réalisation particulier, dans l'étape 200 le modèle numérique de l'éponge à fabriquer est complété dans sa partie inférieure par une série de petites colonnes verticales minces de soutien, de quelques millimètres de hauteur. Ces petites colonnes permettent une séparation facilitée d'avec le substrat.

Selon un mode de réalisation préféré, le procédé comprend en outre une étape de séparation d'avec le substrat réalisée par sciage.

Avantageusement, la taille des grains de poudre servant à la fabrication est de dimension sensiblement typique de 20 à 50 microns.

L'invention vise sous un autre aspect un réservoir de liquide destiné à fonctionner en gravité réduite ou nulle, comportant un dispositif de rétention / expulsion de liquide tel qu'exposé.

L'invention vise également un satellite, comportant un dispositif de rétention / expulsion de liquide tel qu'exposé.

### Brève description des figures

Les buts et avantages de l'invention seront mieux compris à la lecture de la description et des dessins d'un mode particulier de réalisation, donné à titre d'exemple non limitatif, et pour lequel les dessins représentent :
- figure 1 (déjà citée) : une illustration schématique d'un premier dispositif d'expulsion de liquides selon l'état de l'art;
- figure 2 (déjà citée) : une illustration schématique d'un second dispositif d'expulsion de liquides selon l'état de l'art;
- figure 3 : une illustration schématique en vue en perspective d'un dispositif d'expulsion de liquides dans un mode de réalisation de l'invention;
- figure 4 : un schéma simplifié en vue en coupe du dispositif d'expulsion de liquides de la figure 3, dans un premier mode de réalisation du dispositif;
- figure 5 : une vue en perspective d'une structure capillaire d'un dispositif tel que décrit, dans une variante utilisant des alvéoles tubulaires;
- figure 6 : des exemples de configurations de cellules utilisables dans un dispositif selon l'invention;
- figure 7 : un schéma simplifié en vue en coupe d'un dispositif d'expulsion de liquides dans un second mode de réalisation de l'invention;
- figure 8 : un schéma montrant une coupe locale des éléments filaires selon deux surfaces de coupe perpendiculaires auxdits éléments dans ce même second mode de réalisation de l'invention;
- figure 9 : un schéma montrant une coupe locale des éléments filaires selon une surface de coupe perpendiculaire auxdits éléments dans un autre mode de réalisation, ainsi qu'une vue en perspective d'un élément filaire dans ce cas
- figure 10 : un schéma illustrant une forme d'interface liquide-gaz au sein du dispositif
- figures 11a et 11b : deux schémas montrant la configuration d'une entretoise reliant deux éléments filaires respectivement dans deux modes de réalisation
- figure 12 : une vue de côté d'une éponge selon un mode de réalisation de l'invention;
- figure 13 : une vue en perspective correspondant au dispositif de la figure 12;
- figure 14 : une illustration schématique des étapes d'un procédé de "Additive Manufacturing" pour la fabrication d'un dispositif selon l'invention.

### Description détaillée d'un mode de réalisation de l'invention

On note ici à titre préliminaire que les figures ne sont pas à l'échelle.

Dans la suite de la description, on utilise l'acronyme connu de DEL pour désigner par simplification le dispositif d'expulsion / rétention de liquides.

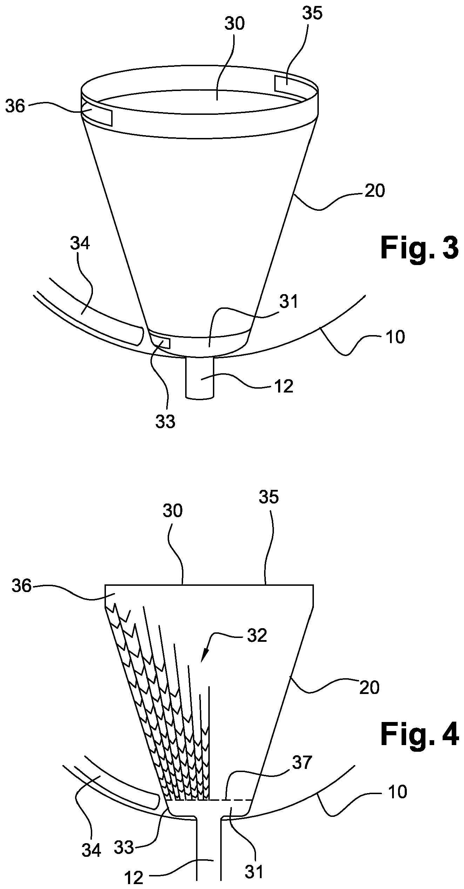

Dans un mode non limitatif de réalisation de l'invention illustré par les figures 3 et 4, l'éponge 32 d'un dispositif d'expulsion/rétention de liquides est disposée dans un boîtier 20, dit **boîtier de rétention,** ici métallique. Ce boîtier 20 est disposé au sein d'un réservoir de liquide 10; par exemple de forme sphérique. Le boîtier 20 est ici de forme sensiblement tronconique, avec une face éloignée de la paroi du réservoir dite capot 30, de forme sensiblement plane. La face opposée au capot 30, placée à proximité immédiate de la paroi du réservoir de liquide 10, est dite base 31 du dispositif d'expulsion/rétention de liquides. Cette base 31 correspond à la zone d'extraction de liquide lors de l'utilisation du DEL. Un orifice d'extraction du liquide 12 est disposé sensiblement au regard du centre de cette base 31.

Dans ce boîtier 20 sont ménagés un ou plusieurs orifices d'entrée de liquide 33, par où l'éponge se recharge en liquide. Ces orifices d'entrée de liquide 33 sont ménagés au niveau de la base 31 du DEL. Ils se présentent ici sous la forme de grilles. Ces orifices d'entrée de liquide 33 sont usuellement placés au regard de lames d'alimentation 34, solidarisées à la face interne du réservoir 10. La forme de ces lames d'alimentation 34 est connue en soi, et un mode de réalisation de celles-ci est par exemple décrit dans le Brevet Européen EP 0 132 175, déjà mentionné.

Le boîtier 20 comporte également un ou plusieurs orifices de sortie de gaz 35, 36, disposés au voisinage du capot ou sur le capot 30, et par où des bulles de gaz peuvent s'évacuer lors du remplissage de l'éponge 32. Le remplissage de l'éponge 32 par sa base 31 sous l'effet de la capillarité créé en effet une surpression au sein du DEL, qui chasse les bulles vers le capot 30.

A la base 31 du DEL, une grille de base 37 vient séparer l'éponge 32 de l'orifice d'extraction du liquide 12.

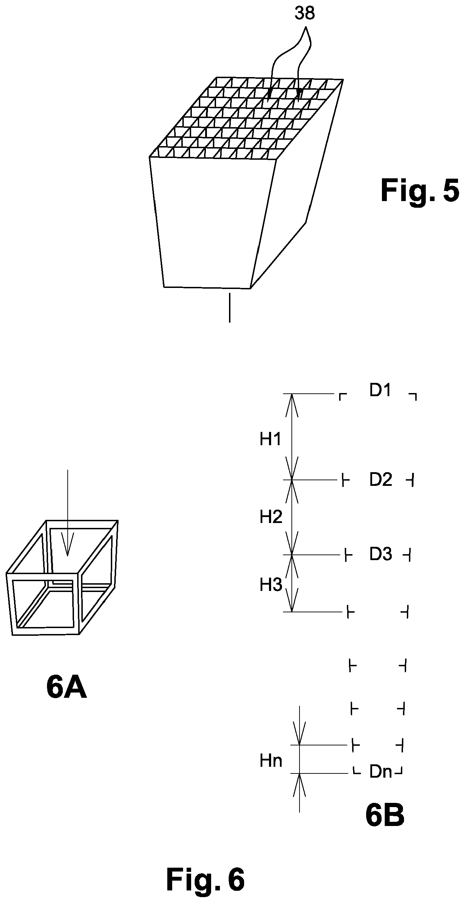

En ce qui concerne la structure capillaire, dite éponge 32, proprement dite, elle est schématiquement constituée, **dans un premier exemple de réalisation** illustré par la figure 5, d'une matrice d'alvéoles 38 juxtaposées et réalisées au sein d'un volume tridimensionnel monobloc.

Sur cette figure 5, la forme de l'éponge est parallélépipédique, mais il est clair que ce principe d'éponge peut être adapté à une forme conique telle qu'évoquée sur les figures 3 et 4, par exemple en organisant des alvéoles autour d'un axe central, selon un dispositif à symétrie de révolution.

Dans cet exemple de réalisation, donné à titre non limitatif, l'éponge est constituée d'un treillis tridimensionnel 38 formé d'éléments filaires, la cellule de base 39, également appelée alvéole, dudit treillis étant de forme sensiblement cubique (voir figure 6A). Le treillis est formé des arêtes des alvéoles cubiques. Les éléments filaires sont ici de section circulaire. La dimension Di des arêtes des alvéoles (voir figure 6B) dans le sens perpendiculaire à l'écoulement du liquide (plan XY) va en diminuant quand on se déplace dans le sens d'écoulement du liquide (axe Z), ce qui crée un gradient capillaire positif dans ce sens. De façon avantageuse, la dimension Hi des arêtes parallèles à la direction d'écoulement du liquide va également en diminuant quand on se déplace dans le sens de l'écoulement du fluide.

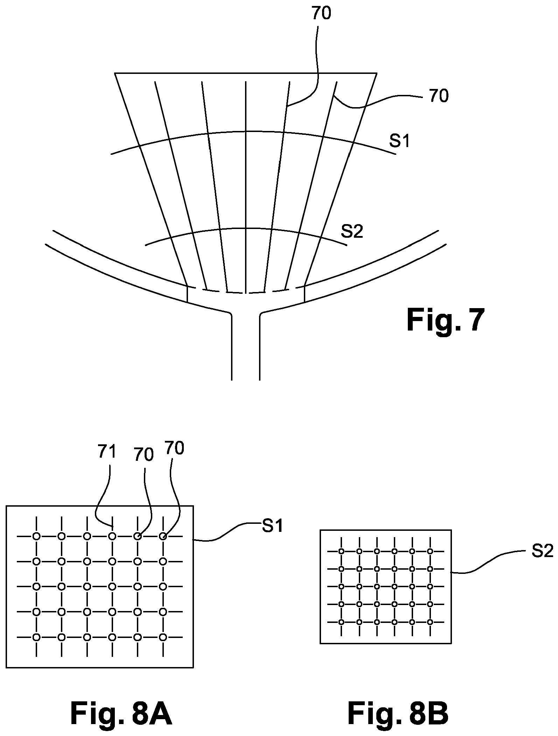

Les figures 7 et 8 montrent d'autres vues schématiques en coupe d'une éponge 32 constituée d'un ensemble d'éléments filaires 70 disposés au sein d'un boîtier de section ici rectangulaire, ces éléments filaires 70 étant reliés par des entretoises 71 réalisant une fonction mécanique et de maintien des éléments filaires .

Comme on le voit sur les figures 8A et 8B, lesquelles représentent à la même échelle des vues en coupe de l'éponge 32 aux niveaux S1 et S2, les éléments filaires sont disposés selon une matrice carré, et reliés par des entretoises 71 dessinant les côtes de ces carrés. Plus on se rapproche de la partie basse de l'éponge (selon la figure 7), plus les éléments filaires 70 sont rapprochés les uns des autres, ce qui crée un gradient capillaire dans une direction souhaitée.

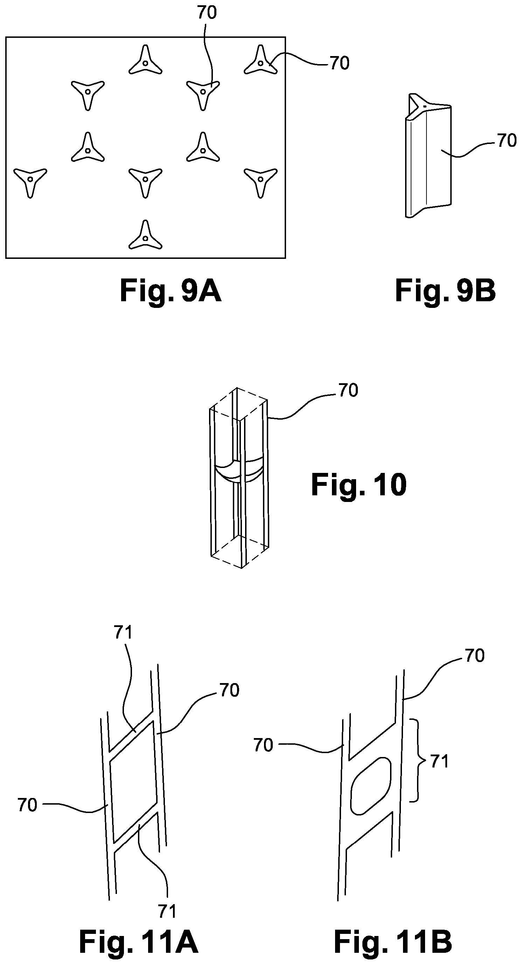

La figure 9A illustre un autre maillage des éléments filaires 70, répartis ici selon un pavage hexagonal. Dans cet exemple, les sections des éléments filaires ont été choisis en forme de "Y" (voir figure 9B), les branches du "Y" s'étendant selon les côtés du maillage hexagonal.

La figure 10 illustre la forme de l'interface liquide-gaz observée entre les éléments filaires 70, la phase liquide étant ici en bas de la figure, les éléments filaires se rapprochant vers le bas conformément aux figures 8A et 8B. Une valeur caractéristique de la capillarité au niveau de cette interface est donnée par le rayon de courbure de la surface de séparation entre liquide et gaz. Lorsqu'on se déplace dans le sens de l'écoulement du liquide (ici vers le bas), du fait que les éléments filaires se rapprochent les uns des autres, le rayon de courbure de la surface de séparation liquide-gaz, c'est-à-dire la capillarité, va aller en augmentant, d'où un gradient capillaire positif dans le sens d'écoulement du liquide.

Dans un cas particulier de réalisation illustré par la figure 11A, les éléments filaires 70 sont reliés entre eux par des entretoises 71 disposées dans les plans dits "verticaux" XZ et YZ, les entretoises n'étant pas perpendiculaires aux éléments filaires 70, mais au contraire, formant avec eux un angle voisin de 45°.

Dans une variante de réalisation conforme à la figure 11B, les entretoises 71 sont de type plaque ajourée, dont les bords sont également inclinés à 45° environ des éléments filaires 70.

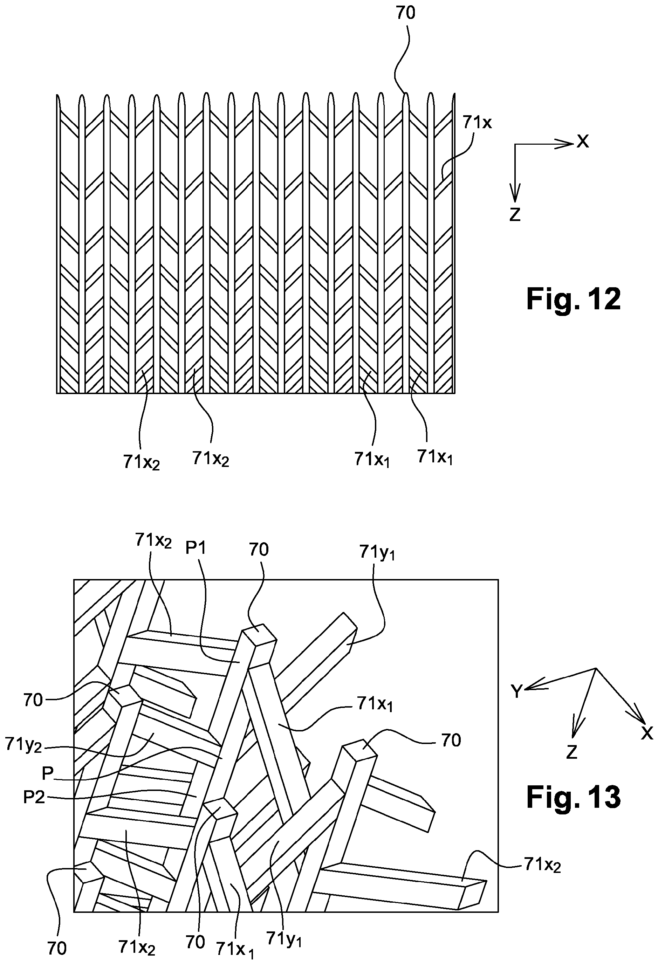

Dans un mode préféré de réalisation, illustré par les figures 12 et 13, les éléments filaires 70 sont rectilignes, sensiblement parallèles entre eux et orientés une même direction de gradient capillaire Z, de sorte qu'ils se rapprochent quand on se déplace dans le sens du gradient capillaire, et les entretoises, disposées entre ces éléments filaires, dans les plans dits "verticaux" XZ et YZ, ne sont pas perpendiculaires aux éléments filaires 70, mais au contraire, forment avec eux un angle voisin de 45°.

Dans le mode de réalisation préféré, tel qu'illustré figure 12, les entretoises correspondant à une même couche d'alvéoles forment des lignes brisées superposées.

Par exemple, dans le plan vertical XZ, dit **longitudinal,** à une même "hauteur" selon la direction de gradient capillaire Z, une entretoise longitudinale sur deux est orientée selon la direction +X+Z (entretoises 71_{X1} sur la figure 12) et une entretoise longitudinale sur deux est orientée selon la direction +X-Z (entretoises 71_{X2} sur la figure 12).

Il en est de même dans le plan vertical YZ, dit **latéral** : à une même "hauteur" selon la direction de gradient capillaire Z, une entretoise latérale sur deux est orientée selon la direction +Y+Z (entretoises 71_{Y1} sur la figure 13) et une entretoise latérale sur deux est orientée selon la direction +X-Z (entretoises 71_{Y2} sur la figure 13).

Cette disposition est mieux visible sur la figure 13, qui illustre en perspective isométrique cinq éléments filaires 70, et un ensemble d'entretoises longitudinales 71_{X} et latérales 71_{Y} reliant ces éléments filaires.

Comme on le voit sur cette figure, dans le présent mode de réalisation, décrit ici titre d'exemple, les entretoises longitudinales 71_{X} et les entretoises latérales 71_{Y} ne s'attachent pas à la même hauteur sur les éléments filaires 70. Au contraire, chaque entretoise latérale 71_{Y} vient s'attacher à un élément filaire 70 (par exemple en un point noté P sur la figure 13) sensiblement à mi-distance entre les points de fixation *P1, P2* des deux entretoises longitudinales 71_{X} les plus voisines

Dans un exemple de réalisation, pour un DEL d'une capacité d'environ un litre de liquide, les DELs actuels ont des volumes de 1 à 5L pour des dimensions caractéristiques de 10 à 30 cm, avec des espaces entre éléments filaires de quelques dixièmes de millimètre à quelques millimètres (typiquement deux millimètres), et une longueur entre entretoises qui varie de cinq à un millimètre entre les deux extrémités du DEL selon la direction Z de gradient capillaire. Les dimensions dépendent naturellement des caractéristiques du liquide qui doit être stocké dans le réservoir.

L'épaisseur des éléments filaires et des entretoises est ici typiquement comprise entre un et trois dixièmes de millimètre.

### Procédé de fabrication

L'éponge est fabriquée par un procédé de fabrication rapide à base de poudres, par exemple de type connu sous le nom de "Selective Laser Melting" (SLM par simplification).

Etape 100 : Dans une étape préliminaire 100, une description numérique tridimensionnelle de la pièce à réaliser est générée et entrée dans la mémoire d'une machine de SLM.

Etape 200 : La pièce à fabriquer, ici l'éponge 32, est alors décomposée de façon logicielle en une superposition de couches très minces. La finesse des couches dépend de la finesse exigée de la pièce finale et de la capacité de la machine. Elle est typiquement de quelques dixièmes de millimètre, les couches étant même de l'ordre de grandeur du dixième de millimètre.

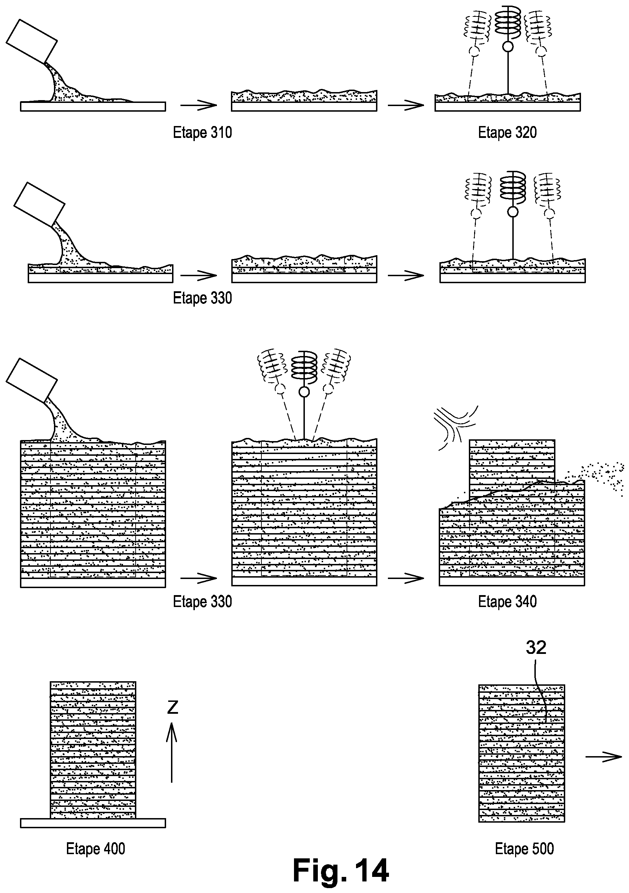

Etape 300 : Puis l'éponge 32 est fabriquée couche par couche. Ce procédé est illustré par la figure 14.

Sous-étape 310 : Pour la première couche, une poudre d'un matériau choisi en fonction du type de liquide à stocker dans le réservoir est versée sur un substrat plan.

Deux alliages métalliques et deux plastiques (approvisionnés à l'état pulvérulent) sont notamment utilisables dans une mise en oeuvre du présent procédé.
(1) Alliage de Titane : TA6V Composition en % : Ti (bal), Al (6,15), V (4,01), C (0,0&), Fe (0,058), O (0,14), N (0,002) et H (0,002)
(2) Alliage d'aluminium : AlSi10Mg Composition en % : Al (bal), Si (9,89) et Mg (0,39)
(3) Polyamide : Polyamide 11
(4) PEEK : Polyetheretherketone

En ce qui concerne le choix de ces produits, le titane est choisi par exemple pour les applications vol avec ergol corrosifs (par exemple NTO, MMH, N2H4), l'aluminium et le PEEK pour des applications vol également mais avec des ergols non ou moins corrosifs (par exemple NH3, C4H10, N2O), le polyamide pour des maquettes ou prototypes fonctionnels sol.
Sous-étape 320 : Puis un laser mobile vient solidifier par fusion le dessin de la pièce de cette couche, typiquement la section des éléments filaires et des segments d'entretoises, le reste de la poudre étant inchangé et restant en place.
Sous-étape 330 : Ensuite, une nouvelle couche de poudre est versée sur la précédente, et ainsi de suite de façon itérative jusqu'à atteindre la hauteur finale de l'éponge. Dans le présent exemple, les éléments filaires 70 sont fabriquées selon la direction verticale Z correspondant à la direction de la gravité au sol.
Sous-étape 340 : Une fois la pièce complètement formée, on vient souffler ou retirer par tout moyen la poudre non solidifiée, laissant ainsi apparaître l'éponge monobloc.

Etape 400 : L'éponge est ensuite séparée de son substrat.

Etape 500 : Elle est ensuite nettoyée, par exemple par traitement ultrasonique, destiné à éliminer des poussières ou particules restées présentes dans la structure. Dans un exemple de procédé de nettoyage, l'éponge 32 est soumise à cinq passages successifs dans un dispositif de nettoyage ultrasonique réalisé en immersion dans un bain d'alcool isopropylique et d'eau.

Alternativement, d'autres procédés sont envisageables : par exemple des procédés par circulation en boucle fermée de fluides solvants mais aussi de détergents avec filtration et éventuellement alternance avec recirculation de fluide abrasifs.

Etape 600 : Enfin, l'éponge est insérée dans un boîtier de forme adaptée, en vue de son installation dans un réservoir de liquide.

Dans une variante de réalisation, le procédé comporte une étape de traitement thermique après séparation d'avec la poussière résiduelle, de manière à réduire les contraintes mécaniques dans la structure, liées à la fabrication.

Dans une autre variante, un traitement de surface de polissage est réalisé.

Dans encore une autre variante, le modèle numérique de l'éponge à fabriquer est complété dans sa partie inférieure par une série de petites colonnes verticales minces de soutien, de quelques millimètres de hauteur. De cette manière, la séparation d'avec le substrat est nettement facilitée, la première couche de la pièce étant autrement soudée directement sur le substrat. Cette séparation peut par exemple être réalisée par sciage.

Lors de la fabrication d'une éponge de type treillis suivant ce procédé, aucune arête du treillis n'est horizontale, notamment pour des raisons de résistance mécanique.

Il est à noter qu'afin de générer une rugosité de surface favorisant la mouillabilité de l'éponge (rugosité typique de 20 à 50 microns), la taille des grains de poudre servant à la fabrication est de dimension sensiblement égale à cette rugosité.

Dans une variante de réalisation, l'éponge et le boîtier sont fabriqués en même temps, par le procédé décrit ci-dessus.

### Variantes de l'invention

Selon une variante, l'éponge 32 du dispositif d'expulsion/rétention de liquides peut être à géométrie cylindrique autour d'un axe central du réservoir 10, la direction de chaque élément filaire 70 convergeant vers un axe central, de sorte que le gradient capillaire des alvéoles soit dirigé radialement vers ledit axe central où se situe un dispositif d'évacuation du fluide.

Il peut également être à géométrie en forme de secteur de sphère, tous les éléments filaires convergeant sensiblement vers un même point, de sorte que le gradient capillaire des alvéoles soit dirigé radialement vers l'orifice d'évacuation du liquide.

Il peut encore être à géométrie sensiblement parallélépipédique, les éléments filaires étant parallèles entre eux, de sorte que le gradient capillaire des alvéoles soit dirigé sensiblement suivant un même axe vers une base reliée à l'orifice d'évacuation du liquide.

## Revendications

1. Dispositif d'expulsion/rétention d'un liquide prédéterminé, apte à être intégré dans un réservoir de liquide destiné à fonctionner en gravité réduite ou nulle, ledit dispositif comprenant une zone dite périphérique et une zone dite zone d'expulsion/rétention de liquide,
**caractérisé en ce que** ledit dispositif comprend une structure tridimensionnelle monobloc dite éponge (32) comportant un ensemble d'éléments (70) de forme sensiblement filaire, dits éléments filaires, ces éléments filaires étant espacés les uns des autres et s'étendant entre ladite zone périphérique de l'éponge et ladite zone d'expulsion/rétention de liquide, lesdits éléments filaires étant sensiblement orientés dans la direction d'écoulement du fluide au sein du dispositif, le liquide étant retenu entre lesdits éléments filaires par capillarité, les éléments filaires étant disposés de telle sorte que le gradient capillaire d'un fluide qui serait disposé au sein de ces seuls éléments filaires est positif ou nul dans le sens d'écoulement du fluide depuis ladite zone périphérique vers ladite zone d'expulsion/rétention de liquide.

2. Dispositif selon la revendication 1, **caractérisé en ce que** la distance entre tout couple d'éléments filaires proches va en diminuant dans le sens d'écoulement du fluide depuis ladite zone périphérique vers ladite zone d'expulsion/rétention de liquide, cette distance étant mesurée le long des éléments filaires comme la longueur d'un segment reliant deux points desdits éléments filaires, ledit segment étant sensiblement orthogonal auxdits éléments filaires.

3. Dispositif selon l'une quelconque des revendications 1 à 2, **caractérisé en ce que**, pour au moins une partie des surfaces orthogonales aux éléments filaires, les intersections des éléments filaires avec cette surface sont des points déterminant deux à deux les côtés de polygones formant un pavage de ladite surface.

4. Dispositif selon l'une quelconque des revendications 1 à 3, **caractérisé en ce que** les éléments filaires (70) sont reliés entre eux par des entretoises (71).

5. Dispositif selon la revendication 4, **caractérisé en ce que** lesdites entretoises sont disposées de sorte à minimiser les pics de capillarité apparaissant le long des éléments filaires aux endroits où se situent lesdites entretoises.

6. Dispositif selon les revendications 3 et 5, **caractérisé en ce que** les projections des entretoises, parallèlement à la direction des éléments filaires, sur lesdites surfaces orthogonales auxdits éléments filaires sont confondues avec des côtés desdits polygones.

7. Dispositif selon l'une quelconque des revendications 4 à 6, **caractérisé en ce que** les entretoises sont en tout ou partie des éléments structuraux de forme sensiblement filaire.

8. Dispositif selon la revendication 7, **caractérisé en ce que** les entretoises ne sont pas orthogonales aux éléments filaires, l'angle entre les entretoises et les éléments filaires étant compris entre 20° et 70°.

9. Dispositif selon l'une quelconque des revendications 1 à 8, **caractérisé en ce que** les éléments filaires ont une section non convexe, adaptée pour rigidifier lesdits éléments filaires.

10. Dispositif selon l'une quelconque des revendications 1 à 9, **caractérisé en ce que** la structure tridimensionnelle monobloc est fabriquée d'une seule pièce selon un procédé de fabrication rapide.

11. Dispositif d'expulsion/rétention d'un liquide prédéterminé selon l'une quelconque des revendications 1 à 10, **caractérisé en ce qu'**il est fabriqué d'une seule pièce selon un procédé de fabrication rapide à base de poudres.

12. Procédé de fabrication d'un dispositif selon l'une quelconque des revendications 1 à 11, **caractérisé en ce que** l'éponge (32) est fabriquée par un procédé de fabrication rapide couche par couche à base de poudres, de type connu dans la littérature anglo-saxonne sous le nom générique de "Layer Manufacturing", le procédé comprenant des étapes suivantes :
Etape 100 : génération d'une description numérique tridimensionnelle de l'éponge à réaliser et stockage de cette description numérique dans la mémoire d'une machine de "Layer Manufacturing",
Etape 200 : décomposition de façon logicielle de l'éponge 32 en une superposition de couches d'épaisseur prédéterminée,
Etape 300 : fabrication de l'éponge 32 couche par couche :
Sous-étape 310 : pour la première couche, une poudre d'un matériau choisi en fonction du type de liquide à stocker dans le réservoir est versée sur un substrat plan,
Sous-étape 320 : un laser mobile vient solidifier par fusion le dessin de la pièce, tel que vue en coupe au niveau de cette couche, le reste de la poudre étant inchangé et restant en place,
Sous-étape 330 : une nouvelle couche de poudre est versée sur la précédente, et ainsi de suite de façon itérative jusqu'à atteindre la hauteur finale de l'éponge 32,
Sous-étape 340 : une fois la pièce complètement formée, on vient retirer la poudre non solidifiée, laissant ainsi apparaître l'éponge monobloc,
Etape 400 : séparation de l'éponge 32 de son substrat.

13. Réservoir de liquide destiné à fonctionner en gravité réduite ou nulle, **caractérisé en ce qu'**il comporte un dispositif selon l'une quelconque des revendications 1 à 11.

14. Satellite, **caractérisé en ce qu'**il comporte un dispositif selon l'une quelconque des revendications 1 à 11.

## Patentansprüche

1. Vorrichtung zum Ausstoßen / Zurückhalten einer vorbestimmten Flüssigkeit, die zur Integration in einen Flüssigkeitstank geeignet ist, der dazu bestimmt ist, bei geringer Schwerkraft oder Schwerelosigkeit zu arbeiten, wobei die Vorrichtung eine sogenannte periphere Zone und eine sogenannte Flüssigkeitsausstoß- / Rückhaltezone umfasst,
was **dadurch gekennzeichnet ist, dass** die Vorrichtung eine einstückige dreidimensionale Struktur aufweist, die als Schwamm (32) bezeichnet wird und einen Satz drahtartiger Elemente (70) umfasst, die Drahtelemente genannt werden, wobei diese Drahtelemente in einem Abstand zueinander verlaufen und sich zwischen der peripheren Zone des Schwamms und der Flüssigkeitsausstoß- / Rückhaltezone erstrecken, wobei die Drahtelemente im Wesentlichen in der Strömungsrichtung der Flüssigkeit in der Vorrichtung ausgerichtet sind, wobei die Flüssigkeit durch Kapillarität zwischen den Drahtelementen gehalten wird, wobei die Drahtelemente in solch einer Weise angeordnet sind, dass der Kapillargradient einer Flüssigkeit, der innerhalb genau dieser Drahtelemente angeordnet wäre, in der Strömungsrichtung der Flüssigkeit von der peripheren Zone zu der Flüssigkeitsausstoß- / Rückhaltezone positiv oder Null ist.

2. Vorrichtung nach Anspruch 1, was **dadurch gekennzeichnet ist, dass** der Abstand zwischen jedem Paar geschlossener Drahtelemente in der Strömungsrichtung der Flüssigkeit von der peripheren Zone zu der Flüssigkeitsausstoß- / Rückhaltezone abnimmt, wobei dieser Abstand entlang der Drahtelemente so gemessen wird wie die Länge eines Segments, das zwei Punkte der Drahtelemente verbindet, wobei das Segment im Wesentlichen orthogonal zu den Drahtelementen ist.

3. Vorrichtung nach einem der Ansprüche 1 und 2, was **dadurch gekennzeichnet ist, dass** die Schnittpunkte der Drahtelemente mit dieser Fläche für zumindest einen Teil der zu den Drahtelementen orthogonalen Flächen Punkte sind, die, in Zweiergruppen, die Seiten der Polygone bestimmen, die wiederum eine Pflasterung der Oberfläche bilden.

4. Vorrichtung nach einem der Ansprüche 1 bis 3, was **dadurch gekennzeichnet ist, dass** die Drahtelemente (70) durch Abstandshalter (71) miteinander verbunden sind.

5. Vorrichtung nach Anspruch 4, was **dadurch gekennzeichnet ist, dass** die Abstandshalter so angeordnet sind, dass die Kapillarspitzen minimiert werden, die entlang der Drahtelemente an den Stellen auftreten, an denen sich die Abstandshalter befinden.

6. Vorrichtung nach einem der Ansprüche 3 und 5, was **dadurch gekennzeichnet ist, dass** die Vorsprünge der Abstandshalter parallel zu der Richtung der Drahtelemente auf den zu den Drahtelementen orthogonalen Oberflächen mit den Seiten der Polygone verschmolzen sind.

7. Vorrichtung nach einem der Ansprüche 4 bis 6, was **dadurch gekennzeichnet ist, dass** die Abstandshalter ganz oder teilweise im Wesentlichen drahtartige Strukturelemente sind.

8. Vorrichtung nach Anspruch 7, was **dadurch gekennzeichnet ist, dass** die Abstandshalter nicht orthogonal zu den Drahtelementen sind, wobei der Winkel zwischen den Abstandshaltern und den Drahtelementen zwischen 20 ° und 70 ° beträgt.

9. Vorrichtung nach einem der Ansprüche 1 bis 8, was **dadurch gekennzeichnet ist, dass** die Drahtelemente einen nicht konvexen Abschnitt aufweisen, der geeignet ist, um die Drahtelemente zu versteifen.

10. Vorrichtung nach einem der Ansprüche 1 bis 9, was **dadurch gekennzeichnet ist, dass** die einteilige dreidimensionale Struktur aus einem einzigen Stück nach einem Schnellherstellungsverfahren hergestellt ist.

11. Vorrichtung zum Ausstoßen / Zurückhalten einer vorbestimmten Flüssigkeit nach einem der Ansprüche 1 bis 10, was **dadurch gekennzeichnet ist, dass** sie aus einem einzigen Stück gemäß einem Schnellherstellungsverfahren auf Pulverbasis hergestellt ist.

12. Verfahren zur Herstellung einer Vorrichtung nach einem der Ansprüche 1 bis 11, was **dadurch gekennzeichnet ist, dass** der Schwamm (32) durch ein schnelles schichtweises Verfahren auf Pulverbasis, wie es in der Literatur mit dem generischen Namen "Layer Manufacturing" bekannt ist, wobei das Verfahren die folgenden Schritte umfasst:
Schritt 100: Erzeugung einer dreidimensionalen digitalen Beschreibung des herzustellenden Schwammes und Speicherung dieser digitalen Beschreibung im Speicher einer "Schichtherstellungsmaschine",
Schritt 200: Software-Abbau des Schwamms 32 in eine Überlagerung von Schichten vorbestimmter Dicke,
Schritt 300: Herstellung des Schwamms 32 Schicht für Schicht:
Unterschritt 310: für die erste Schicht wird ein Pulver eines Materials, das entsprechend der Art der in dem Tank zu speichernden Flüssigkeit ausgewählt wird, auf ein planares Substrat gegeben,
Unterschritt 320: ein sich bewegender Laser verfestigt durch Schmelzen die Konstruktion des Werkstücks, wie im Querschnitt auf Höhe dieser Schicht dargestellt, wobei der Rest des Pulvers unverändert und an Ort und Stelle bleibt,
Unterschritt 330: eine neue Pulverschicht wird auf die vorherige Schicht usw. iterativ gegeben, bis die endgültige Höhe des Schwamms 32 erreicht ist.
Unterschritt 340: Sobald das Stück vollständig geformt ist, wird das nicht verfestigte Pulver entfernt, wodurch der einteilige Schwamm freigelegt wird.
Schritt 400: Trennung des Schwamms 32 von seinem Substrat.

13. Flüssigkeitstank, der dazu bestimmt ist, bei geringer Schwerekraft oder Schwerelosigkeit zu arbeiten, was **dadurch gekennzeichnet ist, dass** er eine Vorrichtung nach einem der Ansprüche 1 bis 11 umfasst.

14. Satellit, was **dadurch gekennzeichnet ist, dass** er eine Vorrichtung nach einem der Ansprüche 1 bis 11 umfasst.

## Claims

1. Device for expelling/retaining a predetermined liquid, suitable for integration in a liquid tank intended to operate at low or zero gravity, said device comprising a so-called peripheral zone and a so-called liquid expulsion/retention zone,
**characterized in that** said device comprising a single-piece three-dimensional structure called a sponge (32) comprising a set of substantially wire-like elements (70), called wire elements, these wire elements being spaced apart from one another and extending between said peripheral zone of the sponge and said liquid expulsion/retention zone, said wire elements being substantially oriented in the direction of flow of the fluid within the device, the liquid being retained between said wire elements by capillarity, the wire elements being arranged in such a way that the capillary gradient of a fluid which would be arranged within just these wire elements is positive or zero in the direction of flow of the fluid from said peripheral zone to said liquid expulsion/retention zone.

2. Device as claimed in claim 1, **characterized in that** the distance between any pair of close wire elements decreases in the direction of flow of the fluid from said peripheral zone to said liquid expulsion/retention zone, this distance being measured along the wire elements like the length of a segment linking two points of said wire elements, said segment being substantially orthogonal to said wire elements.

3. Device as claimed in any one of claims 1 and 2, **characterized in that**, for at least part of the surfaces orthogonal to the wire elements, the intersections of the wire elements with this surface are points determining, two by two, the sides of polygons forming a paving of said surface.

4. Device as claimed in any one of the claims 1 to 3, **characterized in that** the wire elements (70) are linked together by spacers (71).

5. Device as claimed in claim 4, **characterized in that** said spacers are arranged in such a way as to minimize the capillarity peaks occurring along the wire elements at the points where said spacers are located.

6. Device as claimed in any one of claims 3 and 5, **characterized in that** the projections of the spacers, parallel to the direction of the wire elements, on said surfaces orthogonal to said wire elements are merged with the sides of said polygons.

7. Device as claimed in any one of claims 4 to 6, **characterized in that** the spacers are wholly or partly substantially wire-like structural elements.

8. Device as claimed in claim 7, **characterized in that** the spacers are not orthogonal to the wire elements, the angle between the spacers and the wire elements being between 20° and 70°.

9. Device as claimed in any one of claims 1 to 8, **characterized in that** the wire elements have a non-convex section, suitable for rigidifying said wire elements.

10. Device as claimed in any one of claims 1 to 9, **characterized in that** the single-piece three-dimensional structure is manufactured from a single piece according to a rapid manufacture method.

11. Device for expelling/retaining a predetermined liquid as claimed in any one of claims 1 to 10, **characterized in that** it is manufactured from a single piece according to a fast powder-based manufacturing method.

12. Method for manufacturing a device as claimed in any one of claims 1 to 11, **characterized in that** the sponge (32) is manufactured by a fast powder-based, layer-by-layer manufacturing method, of the type known in the literature by the generic name of "Layer Manufacturing", the method comprising the following steps:
step 100: generation of a three-dimensional digital description of the sponge to be produced and storage of this digital description in the memory of a "layer manufacturing" machine,
step 200: software breakdown of the sponge 32 into a superposition of layers of predetermined thickness,
step 300: manufacture of the sponge 32 layer by layer:
substep 310: for the first layer, a powder of a material chosen according to the type of liquid to be stored in the tank is poured onto a planar substrate,
substep 320: a moving laser solidifies, by melting, the design of the piece, as seen in cross section at the level of this layer, the rest of the powder being unchanged and remaining in place,
substep 330: a new layer of powder is poured onto the previous layer, and so on, iteratively, until the final height of the sponge 32 is reached,
substep 340: once the piece is completely formed, the unsolidified powder is removed, thus revealing the single-piece sponge,
step 400: separation of the sponge 32 from its substrate.

13. Liquid tank intended to operate at low or zero gravity, **characterized in that** it comprises a device as claimed in any one of claims 1 to 11.

14. Satellite, **characterized in that** it comprises a device as claimed in any one of claims 1 to 11.
